# EUROPEAN PATENT SPECIFICATION

(11) **EP 0 920 002 B1**
(45) Date of publication and mention of the grant of the patent: **14.08.2002**
(21) Application number: 98309184.4
(22) Date of filing: 10.11.1998
(51) Int. Cl.: G11B 17/04

(54) **Recording medium transfer mechanism**
Aufzeichnungsmedium - Übertragungsmechanismus
Mécanisme de transfert de support d'enregistrement

(30) Priority: 28.11.1997 JP 32764197
(43) Date of publication of application: 02.06.1999
(73) Proprietor: ALPS ELECTRIC CO., LTD., Ota-ku Tokyo 145 (JP)
(72) Inventor: Sakurai, Toshihiro, Sendai-shi, Miyagi-ken (JP)
(74) Representative: Kensett, John Hinton

(56) References cited:
- US-A- 5 467 334

## Description

The present invention relates to a recording medium transfer mechanism for inserting a recording medium into and removing a recording medium from a device. Examples of recording media include disks, such as a compact disk (CD) or a digital video disk (DVD), and other types of recording media.

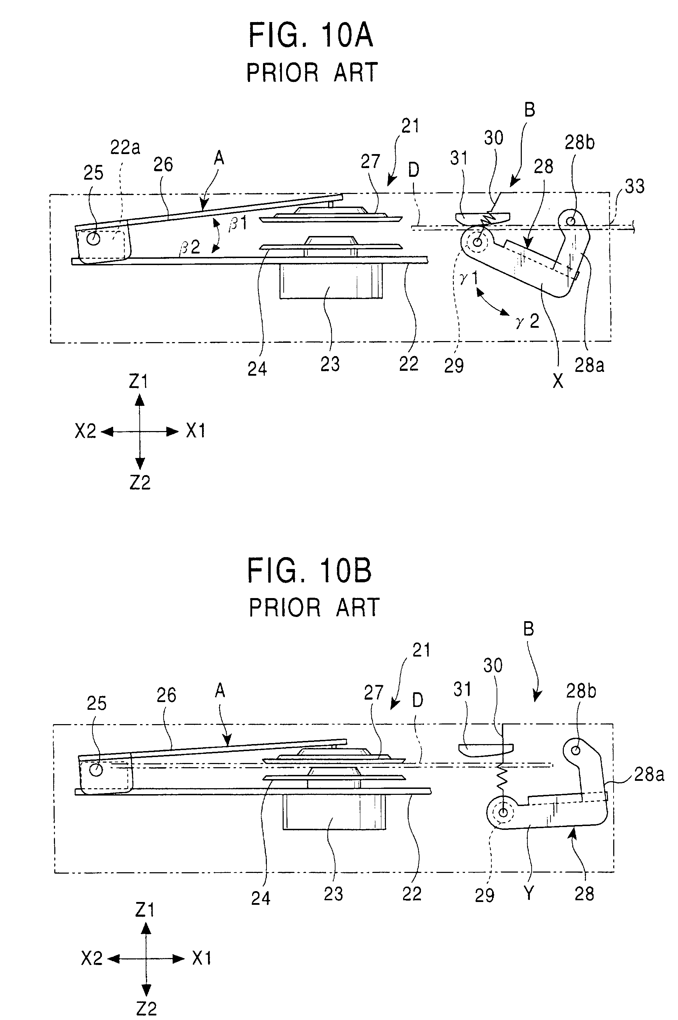

Fig. 10A is a side view of a conventional disk device, in which a recording medium is being transferred, and Fig. 10B is a side view of a conventional disk device, in which transfer of a recording medium has been completed.

A disk drive portion A and a disk transfer means B are provided in the disk device 21 of Fig. 10. The recording medium for use in the disk device 21 may be a disk, such as a CD or a DVD.

In the disk drive portion A, a rotary motor 23 is fixedly provided at a drive chassis 22, and a turntable 24 is rotatably supported by a rotary shaft of the rotary motor 23. A raised portion 22a is formed at the left end (X2) side of the drive chassis 22, by bending the left end (X2) side portion of the drive chassis 22. A clamp member 26 is rotatably supported at one end thereof by a rotary shaft 25 provided at the raised portion 22a. A clamper 27 is rotatably provided at the end of the clamper member 26 which is opposite to the end rotatably supported by the rotary shaft 25. Rotation of the clamp member 26 in the direction of arrow β2 allows chucking between the clamper 27 and the turntable 24.

In the disk transfer means B, a drive roller 29 is rotatably supported by a transfer member 28, and is rotated in the forward or backward direction by a drive motor (not shown). The transfer member 28 has a supporting arm 28a that is formed by bending a portion of the transfer member 28, with a rotary shaft 28b being provided at one end of the supporting arm 28a. The rotary shaft 28b is supported by, for example, a portion of a housing (not shown) so as to be swingable in the directions indicated by γ1 and γ2. A disk guide member 31 is provided above, or at the Z1 side of, the transfer member 28. A biasing member 30, such as a coil spring, is provided at the transfer member 28 in order to bias the drive roller 29 in the Z1 direction. When the transfer member 28 rotates in the γ1 direction by means of the biasing member 30, the drive roller 29 press-contacts the disk guide member 31.

As shown in Fig. 10A, a disk D is placed into or removed from a disk insertion opening 33 at the front face of the disk device 21 (or at the right end or X1 side of the disk device 21 in Fig. 10A). When the disk D is being inserted into or removed from the disk insertion opening 33, the transfer member 28 is rotated in the γ1 direction to a clamping position X.

The disk D, which has been inserted into the disk insertion opening 33, is clamped between the disk guide member 31 and the drive roller 29. Rotational driving force is exerted onto the drive roller 29 to cause it to rotate counterclockwise, causing the disk D to be transferred to the disk drive portion A. The disk D is placed on the turntable 24, and the clamp member 26 rotates in the β2 direction, whereby the disk D is clamped between the clamper 27 and the turntable 24.

As shown in Fig. 10B, when the transfer of the disk D is completed, the transfer 28 is forced to rotate to position Y. In other words, the drive roller 29 separates from the disk guide member 31, so that the disk D, which had been clamped between the clamper 27 and the turntable 24, is unclamped.

The disk D, which has been unclamped, is subjected to a high-speed rotational force by means of a rotary motor 23. This causes information to be written to or read from the disk D by means of a disk recording/reproducing means (not shown) that is provided in the disk device 21.

When the disk D is to be removed, the clamper member 26 rotates in the β1 direction of Fig. 10A, whereby the disk D is unclamped. Then, by a mechanism which is not shown, the transfer member 28 is restored back to the clamping position X as a result of rotating in the γ1 direction, causing the disk D to be re-clamped between the disk guide member 31 and the drive roller 29. Rotational driving force is exerted onto the drive roller 29 to rotate it clockwise, causing the disk D to be removed from the disk insertion opening 33.

However, the above-described conventional disk device has the following problems.

In the above-described disk device 21, in order to rotate the transfer member 28 from the clamping position X to position Y, a special member (not shown), for forcefully rotating the transfer member 28 in the γ2 direction, is required. In other words, the transfer member 28, itself, is biased at all times in the γ1 direction by the biasing member 30, so that a special member is required to rotate it in the γ2 direction, from the clamping position X to the position Y.

In addition, when such a special member is used, other members, such as a drive motor for driving the special member, are required, thereby increasing the number of component parts. As a result, additional space must be provided in the disk device 21 for accommodating them.

Further, in the transfer means B of Fig. 10, the drive roller 29 is provided at the X2 side end of the substantially L-shaped transfer member 28 extending towards the disk drive portion A, so that the distance between the disk insertion opening 33 and the drive roller 29 becomes large, thereby making it difficult to clamp the disk D between the guide member 31 and the drive roller 29 when the amount of insertion of the disk D is small. On the other hand, when the guide member 31 and the drive roller 29 are provided near the opening 33, it is difficult to ensure proper clamping of the disk D during removal thereof, thereby preventing removal of the disk D.

US-A-5,467,334 discloses a mechanism having an opening for insertion or removal of a recording medium, a driving portion for driving the recording medium and a transfer roller disposed between the opening and the driving portion.

Accordingly, in order to overcome the above-described conventional problems, it is an object of the present invention to provide a recording medium transfer mechanism which makes it possible to reduce the number of component parts required and thus reduce the amount of space required for accommodating component parts, and which can ensure insertion and removal of a recording medium, such as a disk.

To this end, according to a basic form of the present invention, there is provided a recording medium transfer mechanism comprising an opening for inserting therein and removing therefrom a recording medium; a recording medium driving portion for driving the recording medium; and a transfer roller disposed between the opening and the recording medium driving portion; wherein when the recording medium is inserted into the opening, the transfer roller, while rotating in a direction in which the recording medium is sent to the recording medium driving portion, moves away from the recording medium driving portion; and wherein when the recording medium is discharged, the transfer roller rotates and moves in a direction opposite to the direction in which the transfer roller rotates and moves when the recording medium is inserted into the opening.

Although not exclusive, the transfer roller may have a shaft which is movably supported between the opening and the recording medium driving portion; wherein as a result of a rotational reaction force produced when the transfer roller sends the recording medium towards the recording medium driving portion, the transfer roller moves away from the recording medium driving portion, and wherein when the recording medium has been sent to the recording medium driving portion, the transfer roller moves away from the recording medium.

Although not exclusive, the transfer roller may have a shaft which is movably supported between the opening and the recording medium driving portion; wherein when the transfer roller starts to move in a direction in which the recording medium is removed, the transfer roller rolls on a travel portion provided in a device and approaches the recording medium driving portion in order to reach a location where the transfer roller is capable of exerting a removing force onto the recording medium at the recording medium driving portion.

Although not exclusive, the recording medium transfer mechanism may further comprise pushing-out means for pushing the recording medium at the recording medium driving portion towards the transfer roller; wherein when the transfer roller moves towards the recording medium driving portion, the pushing-out means operates to push the recording medium towards the transfer roller.

Although not exclusive, the pushing-out means may have an integrally formed travel portion for clamping the recording medium with the transfer roller or which comes into contact with the transfer roller; wherein by a rotational force produced when the transfer roller rotates in the direction in which the recording medium is inserted, the pushing means moves towards the back side of the device; and wherein by a rotational force produced when the transfer roller rotates in a direction in which the recording medium is removed, the pushing-out means moves towards the transfer roller.

According to the present invention, the transfer roller moves between the opening and the recording medium driving portion, so that unlike in the conventional device of Fig. 10 it is no longer necessary to move the transfer roller in the direction of the height of the device. Therefore, the device can be made thinner.

Although the transfer roller can be moved by a force other than its own rotational force, it may also be moved using a transfer motor, by making use of a reaction force of the rotational force of the transfer roller.

The transfer roller moves away from the driving portion when a recording medium is moved into the driving portion, thereby making it possible to stop the driving force from acting on the recording medium at the driving portion. On the other hand, the transfer roller moves towards the driving portion when a recording medium is moved out from the driving portion, so that movement of the recording medium at the driving portion out the driving portion can be ensured using the transfer roller.

When a pushing-out lever means, which moves as the transfer roller moves, is provided the recording medium at the driving portion can be pushed out to a location where it can be removed using the transfer roller, thereby making it possible to ensure clamping of the recording medium by the transfer roller that has moved towards the driving portion.

When the pushing means is moved by the rotational force of the transfer roller, a driving mechanism, for moving the pushing means, can be eliminated.

Fig. 1 is a plan view of an embodiment of the disk device in accordance with the present invention.

Fig. 2 is a side view of the disk device of Fig. 1.

Fig. 3 is a perspective view of the main component parts of the disk device of Figs. 1 and 2.

Fig. 4 is a perspective view of the pushing-out lever.

Fig. 5 is a partial perspective view showing the position of the transfer means and the position of the pushing-out lever relative to each other.

Fig. 6 is a sectional view taken along line VI-VI, which shows the clamp chassis in a raised state.

Fig. 7 is a sectional view similar to that of Fig. 6, which illustrates the rotational movement of the transfer means.

Fig. 8 is sectional view similar to that of Fig. 6, which illustrates the upward movement of the disk guides.

Fig. 9 is a sectional view similar to that of Fig. 6, showing the clamp chassis and the drive chassis at the upper portion of the disk device.

Fig. 10A is a side view of a conventional disk device, in which a recording medium is being transferred. Fig. 10B is a side view of the conventional disk device, in which the transfer of the recording medium has been completed.

A description will now be given of an embodiment, by way of example only

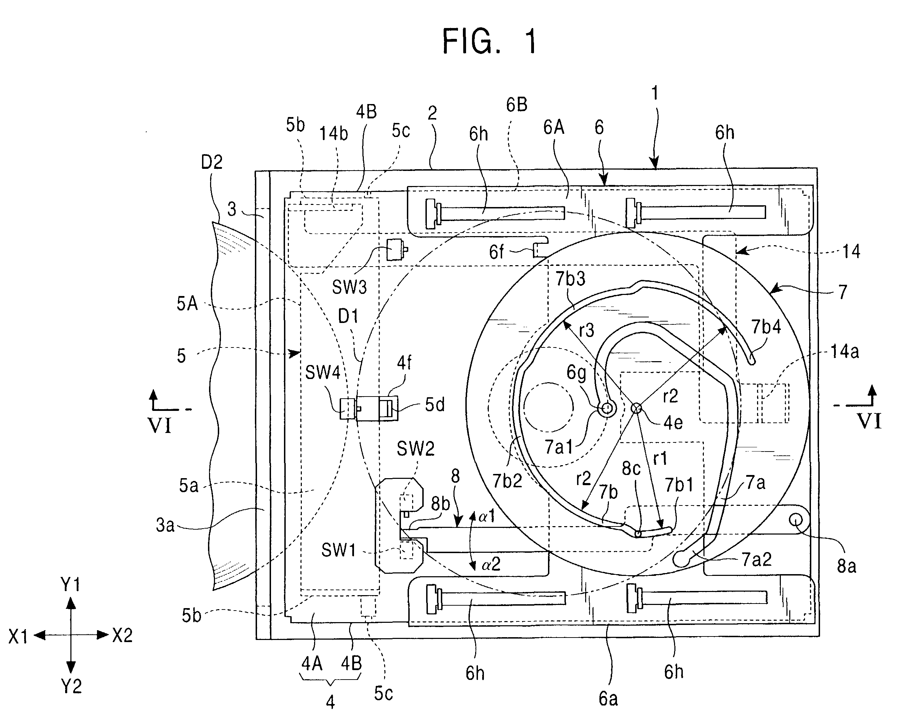

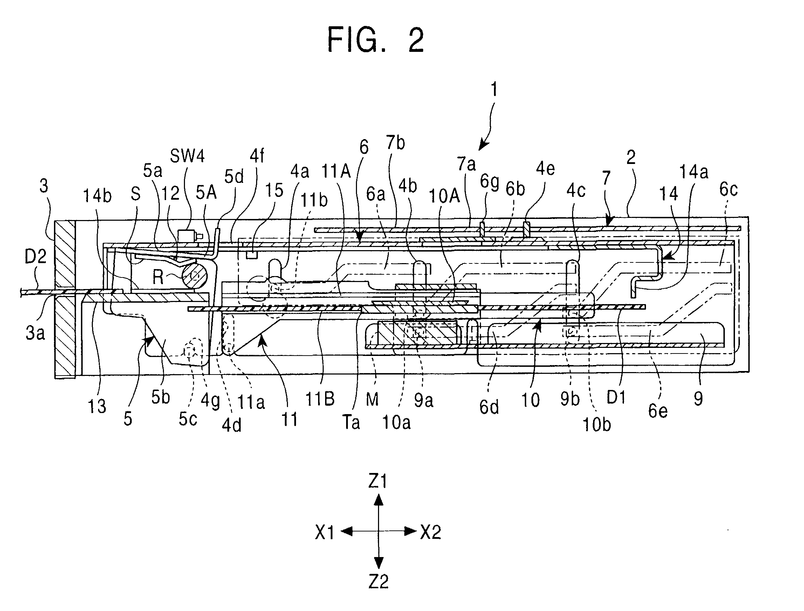

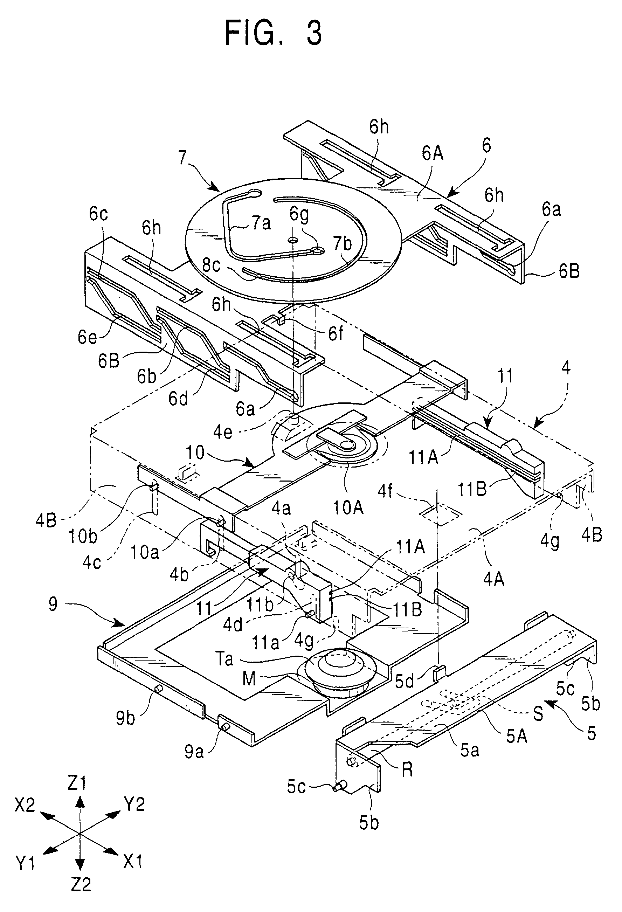

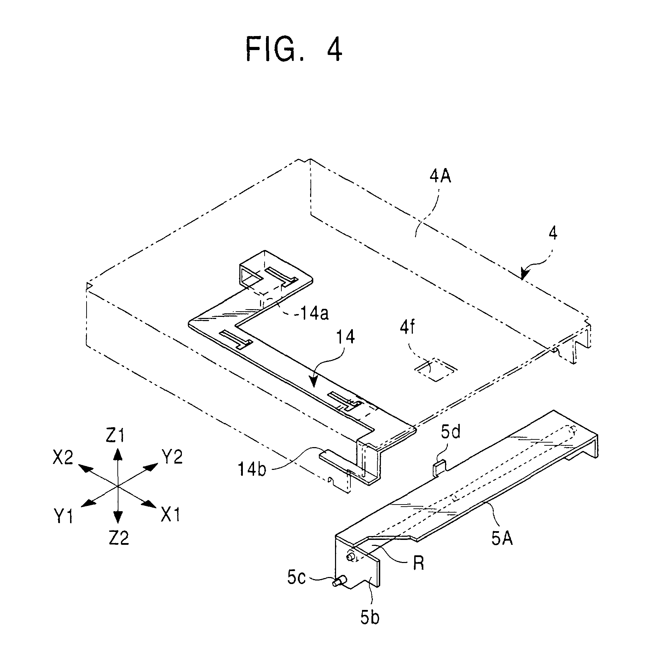

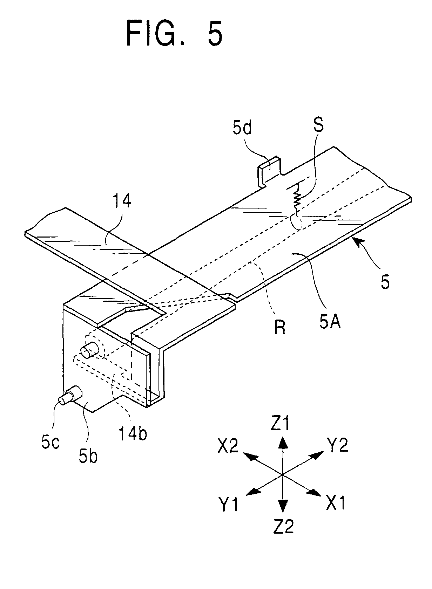

Fig. 1 is a plan view of an embodiment of the disk device. Fig. 2 is a side view of the disk device of Fig. 1. Fig. 3 is a perspective view showing the main component parts used in the disk device of Figs. 1 and 2. Fig. 4 is a perspective view of the pushing-out lever. Fig. 5 is a perspective view showing the position of the pushing-out lever and the position of the transfer means relative to each other.

The disk device 1 of Fig. 1 comprises an outer housing 2 and a front panel 3. The front panel 3 is provided at the left end (X1) side of the disk device 1 and has a disk insertion opening 3a formed therein. The disk device 1 is the so-called slot-in-type disk device which allows a disk (or a recording medium) to be inserted into and removed from the disk device 1 through the disk insertion opening 3a. The recording medium to be loaded into the disk device 1 may be a disk, such as a CD or a DVD.

As shown in Figs. 1 to 3, an inner housing 4 is provided in the outer housing 2. The inner housing 4 comprises a top face 4A and side plates 4B, all of which are formed by bending a metallic plate. In each side plate 4B are formed a plurality of guide grooves 4a, 4b, 4c, and a U-shaped groove 4d, indicated by dotted lines in Fig. 2, so as to extend in the direction of the height of the disk device 1 (or in the Z1 and Z2 directions). A rotary shaft 4e is provided at the top face 4A. A transfer means 5 is provided in the inner housing 4 so as to be disposed at the X1 side thereof (or at the back side of the disk insertion opening 3a). A moving member 6, acting as moving means, is placed onto the outer peripheral surface of the inner housing 4. The transfer means 5 and the moving member 6 form a recording medium transfer mechanism.

The transfer means 5 is formed of, for example, a metallic plate. It comprises a transfer chassis 5A, formed by bending a metallic plate into a substantially U shape; a transfer roller R rotatably supported in the transfer chassis 5A; and a transfer motor (not shown) for rotating the transfer roller R either clockwise or counterclockwise. At the underside of the top face 5a of the transfer chassis 5A is provided a biasing member S, being a plate spring or the like, which biases the transfer roller R in the Z2 direction. At the side plates 5b of the transfer chassis 5A are provided respective rotary shafts 5c which protrude in the direction of the Y axis and which are rotatably supported in respective recesses 4g formed in the inner housing 4.

The moving member 6 is formed by bending a metallic plate into a substantially H shape, as viewed in a plane. It can slide freely on the surface of the inner housing 4, in the X1 and X2 directions, through the four guide grooves 6h that are formed in the top face 6A of the moving member 6. Guide grooves 6a, 6b, 6c, 6d, and 6e are formed in each of the side plates 6B so as to be disposed symmetrically on the left and right sides of the moving member 6.

On the top face 6A of the moving member 6 (or at the Z1 side) is provided a disk-shaped large gear 7 which is rotatably supported by the rotary shaft 4e. A drive motor (not shown), provided in the disk device 1, is connected to the large gear 7, either directly or through a group of gears, and causes the large gear 7 to rotate either clockwise or counterclockwise. The large gear 7 has a first cam groove, designated 7a, and a second cam groove, designated 7b, with a sliding pin 6g that is implanted in the top face 6A of the moving member 6 being inserted in the first cam groove 7a. Accordingly, when the large gear 7 rotates either clockwise or counterclockwise, the sliding pin 6g moves along the first cam groove 7a, causing the moving member 6 to move in the X1 and X2 directions.

As shown in Fig. 1, a rotary lever 8 is provided at the top face 4A of the inner housing 4 and is rotatably supported by a supporting shaft 8a at the X2 side of the disk device 1. A pusher portion 8b is formed at the end of the rotary lever 8 opposite to the end where the supporting shaft 8a is disposed (or at the X1 side). It faces a first switch SW1 and a second switch SW2. A sliding pin 8c is provided between the supporting shaft 8a and the pusher portion 8b of the rotary lever 8, and is inserted into the second cam groove 7b in the large gear 7.

The second cam groove 7b is divided into four portions 7b1, 7b2, 7b3, and 7b4, with adjacent portions merging into each other. They are divided in accordance with a predetermined angle, and the distances (or radii) from the rotary shaft 4e to the four portions are different. Radius r1 measured from the rotary shaft 4e to the end of the cam groove portion 7b1 towards which the sliding pin 8c moves in the counterclockwise direction is largest; radius r2 measured from the rotary shaft 4e to the cam groove portion 7b2 adjacent to the cam groove portion 7b1 is the next largest; and radius r3 measured from the rotary shaft 4e to the cam groove portion 7b3 is smaller than radius r2. The radius measured from the rotary shaft 4e to the end of the cam groove portion 7b4 towards which the sliding pin 8c moves in the clockwise direction is substantially equal to radius r2, so that it is also expressed as r2. In this case, r1 > r2 > r3. Therefore, when the large gear 7 rotates to cause the sliding pin 8c to move in the cam groove 7b, the rotary lever 8 rotates either in the α1 or α2 direction as a result of the radial differences. The rotation of the rotary lever 8 causes either the first switch SW1 or the second switch SW2 to be turned on or off.

The moving member 6 has a pusher portion 6f, formed by bending a portion of the top face 6A, and faces a third switch SW3 provided at the top face 4A of the inner housing 4. When the moving member 6 has moved as far as possible in the X1 direction, the pusher portion 6f pushes the third switch SW3 and turns it on.

A protrusion 5d is formed at the top face 5a of the transfer chassis 5A, by bending a portion of the top face 5a. It is exposed from a square hole 4f, formed in the inner housing 4, in the Z1 direction, so as to be disposed at an X1 side edge of the square hole 4f in order to face a fourth switch SW4.

As shown in Figs. 4 and 5, a pushing-out lever 14, acting as pushing-out means, is provided at the underside of the top face 4A of the inner housing 4. The pushing-out lever 14 is formed by bending a metallic plate into a substantially L shape. A pusher portion 14a, which can push an end of the disk D, is formed at the X2 side end of the pushing-out lever 14. The pusher portion 14a is positioned at substantially the same height as the disk insertion opening 3a. The other (X1 side) end of the pushing-out lever 14 is formed so as to be bent along one of the side plates 5b of the transfer chassis 5A. Part of the bent portion is further bent to form a travel portion 14b located below the transfer roller R. As mentioned above, the biasing member S is a mechanism that biases the transfer roller R in the Z2 direction, so that the transfer roller R resiliently presses the travel portion 14b.

When the transfer roller R rotates, a feeding force acts on the travel portion 14b, causing the pushing-out lever 14 to move forward or backward in the X1 or the X2 direction, in accordance with the direction of rotation of the transfer roller R. The thickness of the travel portion 14b is about the same as the thickness of the disk, thereby allowing the transfer roller R to uniformly press-contact both the travel portion 14b and the disk.

As shown in Figs. 2 and 3, a recording medium driving portion comprising a drive chassis 9, being a disk driving means, and a clamp chassis 10, being a clamping means, is provided in the inner housing 4.

A spindle motor M is provided at the drive chassis 9, with a turntable Ta being rotatably supported by the rotary shaft thereof. A clamper 10A is provided at the clamp chassis 10 so as to face the turntable Ta. Moving pins 9a and 9b are implanted in each side wall of the drive chassis 9, whereas moving pins 10a and 10b are implanted in each side wall of the clamp chassis 10. The moving pins 9a and 9b of the drive chassis 9 are movably inserted into the corresponding guide grooves 4b and 4c, as well as in the corresponding guide grooves 6d and 6e. Similarly, the moving pins 10a and 10b of the clamp chassis 10 are movably inserted into the corresponding guide grooves 4b and 4c, as well as in the corresponding guide grooves 6b and 6c.

A pair of disk guides 11, acting as means for temporarily supporting a disk, are provided at the pair of side plates 4B of the inner housing 4. The disk guides 11 are formed by, for example, injection molding of resinous material, with upper ribs 11A and lower ribs 11B, which extend in the X1 and X2 directions, being formed on opposing side faces of the disk guides 11. Moving pins 11a and 11b are press-fitted to the X1 side lower portion and the Z1 side semicircular protruding portion, respectively, of each of the disk guides 11. Each moving pin 11a is inserted into its associated U-shaped groove 4d, whereas each moving pin 11b is inserted into its associated guide groove 4a and its associated guide groove 6a, thereby allowing each of the disk guides 11 to move up and down in the Z1 and Z2 directions.

A disk recording/reproducing means (not shown) is provided at the drive chassis 9, with a pickup facing the recording surface of the disk and being movable towards the rotary shaft of the turntable Ta. An optical or magnetic head, mounted at the turntable Ta, faces the recording surface of the disk D so that it can be used to record information onto or reproduce information from the disk D.

A description will now be given of the operation of the disk device having the above-described construction.

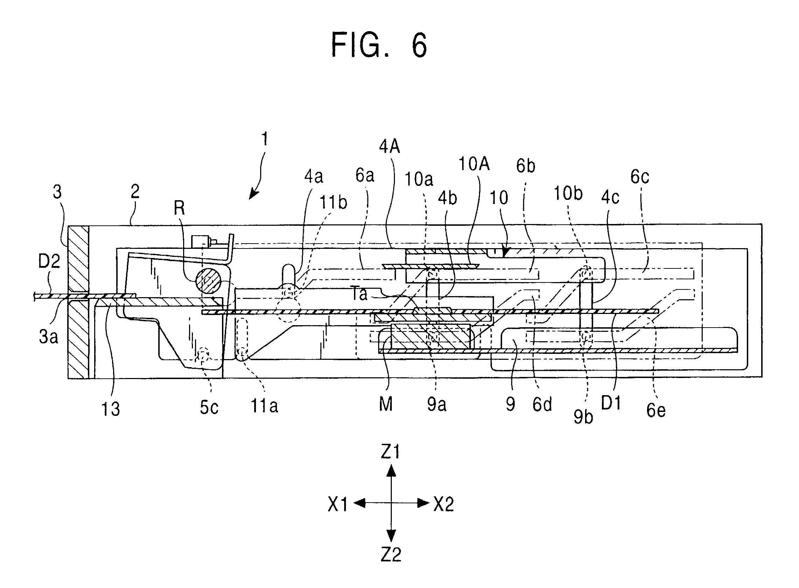

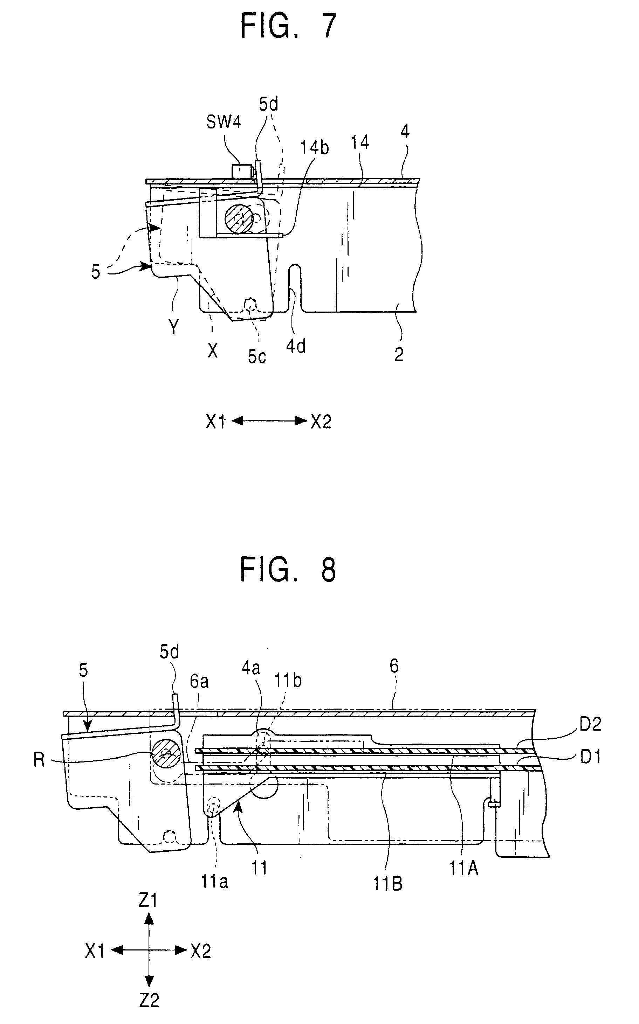

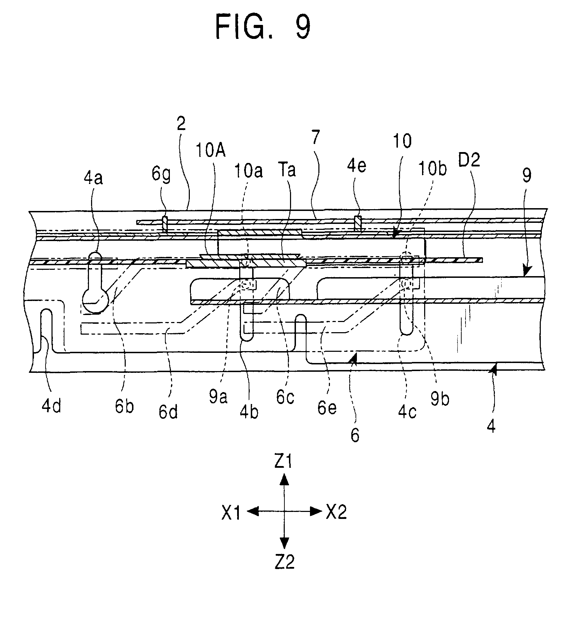

Fig. 6 is a sectional view taken along line VI-VI of Fig. 1, showing the clamp chassis in a raised state. Fig. 7 is an enlarged view of the transfer means. Fig. 8 is a partial view illustrating the movement of the disk guides. Fig. 9 is a partial view illustrating the clamp chassis and the drive chassis at the upper portion of the disk device. It is to be noted that Figs. 7 to 9 are all sectional views.

In Fig. 2, the moving member 6 is shown as being moved as far as possible in the X2 direction, with the drive chassis 9, the clamp chassis 10, and the disk guides 11 all being moved downward to the lower portion of the disk device 1, at the Z2 side of the disk device 1. A first disk D1, being clamped between the turntable Ta and the clamper 10A, is rotationally driven in order to record information onto or reproduce information from the first disk D1. It is to be noted that when the first disk D1 is clamped, the first switch is turned on while the second, third, and fourth switches are turned off. (See Fig. 1.)

With the first disk D1 in the aforementioned clamped state, when a second disk D2 is inserted into the disk insertion opening 3a, the detecting means 12, provided at the transfer means 5, detects the insertion, and the rotation of the spindle motor M is stopped. At the same time, when a drive motor (not shown) is started, counterclockwise rotational force (see Fig. 1) acts on the large gear 7, causing the moving member 6 to move in the X1 direction of Fig. 2. As shown in Fig. 6, movement of the moving member 6 in the X1 direction of Fig. 2 first causes the moving pins 10a and 10b of the clamp chassis 10 to move upward along the inclined portions of their respective guide grooves 4b and 4c and their respective guide grooves 6b and 6c, whereby the clamp chassis 10 moves upward vertically in the Z1 direction. In other words, the clamp chassis 10 moves away from the drive chassis 9, whereby the first disk D1 is unclamped.

When the clamp chassis 10 starts to move upward, the first switch SW1 is turned off. When the upward movement of the clamp chassis 10 has been completed so that the moving pins 10a and 10b have reached the top side of the inclined portions of their respective guide grooves 6b and 6c, the second switch SW2 is turned on. More specifically, the sliding pin 8c moves within the portion 7b2 (with a radius r2) of the second cam groove 7b, when the large gear 7 rotates through a predetermined angle and the moving pins 9a and 9b are positioned at the bottom side of the inclined portions of their respective guide grooves 6b and 6c. This causes the rotary lever 8 to rotate slightly in the α1 direction, whereby the pusher portion 8b separates from the first switch SW1 in order to turn off the first switch SW1. When the large gear 7 rotates further and the moving pins 9a and 9b move upward along the inclined portions of their respective guide grooves 6b and 6c and reach the top side of the inclined portions of their respective guide grooves 6b and 6c, the sliding pin 8c at the large gear 7 moves into the portion 7b3 from the portion 7b2 of the second cam groove 7b. This causes the rotary lever 8 to rotate further in the α1 direction, causing the second switch SW2, which had been in an off state, to be pushed and turned on. With the upward movement of the clamp chassis 10, the rotary lever 8 is rotated, in steps, along the second cam groove 7b.

When the switching operation of the second switch SW2 to the on state is detected, the transfer motor starts to operate, causing the transfer roller R to rotate counterclockwise or in the direction in which the second disk D2 is transferred in the disk device 1 (see Fig. 2). With its horizontal posture being maintained by a supporting base 13 acting as guide disposed between the disk insertion opening 3a and the transfer roller R, the second disk D2 is inserted into the disk insertion opening 3a by the user. When the X2 side end of the second disk D2 moves into the bottom side of the transfer roller R, it is clamped between the transfer roller R and the supporting base 13 and transferred to the back portion or X2 side of the disk device, by the feeding force of the transfer roller R. Here, the second disk D2 is guided along the upper ribs 11A of the disk guides 11 and transferred into the disk device 1. After the transfer of the second disk D2, the second disk D2 is temporarily supported on the upper ribs 11A.

When the transfer roller R rotates counterclockwise, the feeding force of the transfer roller R also acts on the travel portion 14b of the pushing-out lever 14, so that the pushing-out lever 14 moves in the X2 direction. This causes the pusher portion 14a to move away from the recording medium driving portion (comprising the drive chassis 9 and the clamp chassis 10), in the X2 direction. The transfer chassis 5A of the transfer means 5, which is rotatably supported by the rotary shafts 5c, rotates in the X1 direction as a result of the rotational force of the transfer roller R that moves on the travel portion 14b. More specifically, the transfer means 5, at the initial position X, indicated by dotted lines in Fig. 7, rotates counterclockwise with the rotary shafts 5c as center, and tilts towards the panel 3 (or towards the X1 side) to position Y, as indicated by the solid line in Fig. 7. Here, the fourth switch SW4, which had been in an off state, is pushed by the protrusion 5d and turned on.

When the disk D2 is inserted in this way, the pusher portion 14a of the pushing-out lever 14 and the transfer means 5 move away from the recording medium driving portion. Since the transfer roller R moves in the X1 direction while transferring the disk in the X2 direction, upon turning on of the fourth switch SW4, transfer of the disk into the disk device is ensured, and the transfer roller R separates from the X1 side end of the disk, so that transfer force is no longer exerted on the disk.

When it is confirmed that the fourth switch SW4 has been turned off, the large gear 7 rotates again, causing the moving member 6 to move further in the X1 direction. Here, as shown in Fig. 8, the moving pins 11b of the disk guides 11, which move in their respective guide grooves 4a and their respective guide grooves 6a, move upward along the inclined portions of their respective guide grooves 4a and their respective guide grooves 6a, whereby the disk guides 11 move vertically upward in the Z1 direction. The second disk D2 is supported on the upper ribs 11A of the disk guides 11, while the first disk D1, placed on the turntable Ta, is supported on the lower ribs 11B, both of which move upward in the Z1 direction. When the moving pins 11b reach the upper horizontal portion of their respective guide grooves 6a, they are positioned at the height of the disk insertion opening 3a. The X2 side edge of the first disk D1 faces the pusher portion 14a of the pushing-out lever 14.

When the moving member 6 moves further in the X1 direction, and the moving pins 11b move to the upper horizontal portion of their respective guide grooves 6a, in the X2 direction, the height of the disk guides 11 is determined. Here, the sliding pin 8c moves from the portion 7b3 to the portion 7b4 of the second cam groove 7b in the large gear 7 in order to turn off the second switch SW2.

Detection of an off signal of the second switch SW2 causes a clockwise rotational force, which acts in an opposite direction to counterclockwise rotational force exerted on the transfer roller R up to this time, to be exerted on the transfer roller R. When a clockwise rotational force is exerted onto the transfer roller R, the operations described above are executed in the reverse order. More specifically, the transfer means 5, which is at position Y, indicated by the solid line of Fig. 7, rotates clockwise and is restored back to its initial position X, indicated by the dotted lines of Fig. 7. On the other hand, in order to apply a force, in the X1 direction, to the travel portion 14b, the pushing-out lever 14 is moved in the X1 direction. This causes the pusher portion 14a to push the X2 side end of the first disk D1 in the X1 direction, whereby the first disk D1 is pushed, in the X1 direction. Here, when the transfer means 5 is restored back to its initial position X, the X1 side end of the first disk D1 is clamped between the lower portion side of the moving transfer roller R and the supporting base 13. Thereafter, the first disk D1 is subjected to the clockwise force of the transfer roller R, transferred in the X1 direction, and eventually ejected from the disk insertion opening 3a.

The completion of the ejection operation of the first disk D1 can be detected by a detecting means 15, such as an optical sensor, which is provided, for example, at the underside of the top face 4A of the inner housing 4, and by the aforementioned detecting means 12 (see Fig. 2). The X1 side end of the first disk D1 passes by the detecting means 15, and the transfer roller R stops rotating before the X1 side end of the first disk D1 passes by the detecting means 12. This causes the X1 side end of the first disk D1, which is clamped between the transfer roller R and the supporting base 13, to stop, thereby making it possible to prevent the disk D1 from dropping when it is being ejected. The disk D1 can be easily removed by the user, by gently pulling out the disk D1 in the X1 direction.

When the completion of the ejection operation of the first disk D1 is detected by the detecting means 15, the large gear 7 rotates again, causing the moving member 6 to move further in the X1 direction. The sliding pin 6g reaches an end portion 7a2 of the first cam groove 7a. When the moving member 6 moves further in the X1 direction, the moving pins 9a and 9b of the drive chassis 9 move upward along the inclined portions of their respective guide grooves 4b and 4c and of their respective guide grooves 6d and 6e, and arrive at the horizontal portion at the upper side of the inclined portions of their respective guide grooves 4b and 4c and their respective guide grooves 6d and 6e. When the drive chassis 9 is moving upward, the second disk D2, which had been supported by the upper ribs 11A, is placed on the turntable Ta. When the moving pins 9a and 9b of the drive chassis 9 reach the upper side of the inclined portions of their respective guide grooves 4b and 4c and their respective guide grooves 6d and 6e, a chucking operation is performed between the turntable Ta and the clamper 10A, whereby the second disk D2 is clamped therebetween. When the second disk D2 is in a clamped state, the movable member 6 has moved as far as possible in the X1 direction, causing the pusher portion 6f to push the third switch SW3 and switch it from an off to an on state. When an on signal is detected, and the clamp chassis 10 and the drive chassis 9 are at the upper portion of the disk device, the disk recording/reproducing means (not shown), provided at the drive chassis 9, records information onto or reproduces information from the second disk D2.

As mentioned above, when the second disk D2 is inserted, the pusher portion 14a of the pushing-out lever 14 and the transfer means 5 move away from the recording medium driving portion, so that the pusher portion 14a and the transfer roller R do not interfere with the rotation of the second disk D2, thereby allowing smooth rotation thereof.

A simple description will now be given of the case where a third disk D3 (not shown) is inserted into the disk insertion opening 3a, when information is being recorded onto or reproduced from the second disk D2 at the upper portion of the disk device 1.

When information is being recorded onto or reproduced from the second disk D2 at the upper portion of the disk device 1, the large gear 7 has rotated as far as possible in the counterclockwise direction, and the sliding pin 6g is at the end portion 7a2 of the first cam groove 7a.

When the third disk D3 is inserted into the disk insertion opening 3a, this is detected by the detecting means 12, as described above, and the disk recording/reproducing means stops operating. Then, the large gear 7 rotates clockwise, causing the moving member 6 to move in the X2 direction. This causes the drive chassis 9 to move downward along the guide grooves 6d and 6e, whereby the clamper 10A and the turntable Ta move away from each other, causing the second disk D2 to be unclamped. When the drive chassis 9 is moving downward, the second disk D2 is supported by the upper ribs 11A of the disk guides 11, so that only the drive chassis 9 moves downward to the lower portion of the disk device 1.

In this condition, the third disk D3 is placed in the disk device 1 in essentially the same way by the above-described operations. Since the disk guides 11 are at the upper portion of the disk device 1, the third disk D3, which has been placed in the disk device 1, is supported by the lower ribs 11B. When the moving member 6 moves in the X2 direction, the disk guides 11 move downward along the inclined portions of the guide grooves 6a and arrive at the lower portion of the disk device 1. The downward movement of the disk guides 11 causes the third disk D3 to be supported on the lower ribs 11B of the disk guides 11, while the second disk D2 is supported on the upper ribs 11A, both of which disks D2 and D3 move downward in the Z1 direction. During the downward movement of the disk guides 11, the third disk D3, which had been supported by the lower ribs 11B, is placed on the turntable Ta.

When the disk guides 11 have moved downward, the second disk D2 is removed from the disk device 1. As described above, the pushing-out lever 14 moves in the X1 direction as a result of the clockwise rotation of the transfer roller R, so that first disk D1 is pushed out towards the X1 side by the pusher portion 14a. The second disk D2 is clamped between the transfer roller R and the supporting base 13, and removed by the force of the transfer roller R. As the transfer means 5 rotates from position Y to position X, the transfer roller R moves close to the recording medium driving portion. This ensures clamping of the second disk D2 between the transfer roller R and the supporting base 13.

Upon completion of the removal of the second disk D2, the moving member 6 moves further in the X2 direction, so that the moving pins 10a and 10b move downward along their respective guide grooves 6b and 6c to the lower portion of the disk device 1. Chucking is performed between the clamper 10A and the turntable Ta, whereby the third disk D3 is clamped therebetween. It is to be noted that the disk D2 placed on the turntable Ta is positioned between the lower side of the upper ribs 11A and their respective lower ribs 11B, without contacting the upper and lower ribs 11A and 11B. With the clamp chassis 10 and the drive chassis 9 being at the lower portion of the disk device 1, the disk recording/reproducing means (not shown), provided at the drive chassis 9, records information onto and reproduces information from the third disk D3.

As can be understood from the foregoing description, according to the present invention, the transfer roller moves between the disk insertion opening and the recording medium driving portion, thereby making it unnecessary to move the transfer roller R in the direction of the height of the disk device 1. Therefore, the disk device can be made thin. In addition, when the transfer roller is moved by making use of the reaction force of the rotational force of the transfer roller, a mechanism for moving the transfer roller is not required.

According to the present invention, the transfer roller moves away from the driving portion when a recording medium is placed at the driving portion. Therefore, it is possible to stop the driving force from being exerted on the recording medium at the driving portion as a result of the movement of the transfer roller away from the driving portion. In addition, when the recording medium is to be removed from the disk device, the transfer roller moves towards the driving portion. Therefore, removal of the recording medium at the driving portion by the transfer roller can be ensured.

According to the present invention, a pushing-out means, which moves in accordance with the movement of the transfer roller, can be used to push the recording medium at the driving portion to a location where it can be removed by the transfer roller. In addition, clamping of the recording medium, which has moved towards the driving portion through the transfer roller, can be ensured.

According to the present invention, when the pusher means is moved by the rotational force of the transfer roller, a driving mechanism for moving the pushing-out means is no longer required.

## Claims

1. A recording medium transfer mechanism, comprising:
an opening (3a) for inserting therein and removing therefrom a recording medium;
a recording medium driving portion (9, 10) for driving the recording medium; and
a transfer roller (R) disposed between said opening and said recording medium driving portion;
**characterised in that**, when the recording medium is inserted into said opening, said transfer roller, while rotating in a direction in which the recording medium is sent to said recording medium driving portion, moves away from said recording medium driving portion; and
wherein when the recording medium is discharged, said transfer roller rotates and moves in a direction opposite to the direction in which said transfer roller rotates and moves when the recording medium is inserted into said opening.

2. A recording medium transfer mechanism according to Claim 1, wherein said transfer roller (R) has a shaft which is movably supported between said opening and said recording medium driving portion; wherein as a result of a rotational reaction force produced when said transfer roller sends the recording medium towards said recording medium driving portion (9, 10), said transfer roller moves away from said recording medium driving portion; and wherein when the recording medium has been sent to said recording medium driving portion, said transfer roller moves away from the recording medium.

3. A recording medium transfer mechanism according to Claim 1, wherein said transfer roller (R) has a shaft which is movably supported between said opening (3a) and said recording medium driving portion (9, 10); and wherein when said transfer roller starts to move in a direction in which the recording medium is removed, said transfer roller rolls on a travel portion (14b) provided in a device and approaches said recording medium driving portion in order to reach a location where said transfer roller is capable of exerting a removing force onto the recording medium at said recording medium driving portion.

4. A recording medium transfer mechanism according to Claim 1, further comprising pushing-out means (14) for pushing the recording medium at said recording medium driving portion towards said transfer roller (R); wherein when said transfer roller moves towards said recording medium driving portion, said pushing-out means operates to push the recording medium towards said transfer roller.

5. A recording medium transfer mechanism according to Claim 4, wherein said pushing-out means has an integrally formed travel portion (14b) which is used for clamping the recording medium between said travel portion and said transfer roller or which comes into contact with said transfer roller; wherein by a rotational force produced when said transfer roller rotates in the direction in which the recording medium is inserted, said pushing means moves towards the back side of the device; and wherein by a rotational force produced when said transfer roller rotates in a direction in which the recording medium is removed, said pushing-out means mores towards said transfer roller.

## Patentansprüche

1. Aufzeichnungsmedium-Transfermechanismus, umfassend:
eine Öffnung (3a) zum Einführen eines Aufzeichnungsmediums in dieselbe und zum Entnehmen aus derselben;
einen Aufzeichnungsmedium-Antriebsabschnitt (9, 10) zum Antreiben des Aufzeichnungsmediums; und
eine Transferrolle (R), die zwischen der Öffnung und dem Aufzeichnungsmedium-Antriebsabschnitt angeordnet ist; **dadurch gekennzeichnet, daß** dann, wenn das Aufzeichnungsmedium in die Öffnung eingeführt wird, die Transferrolle, während sie sich in einer Richtung dreht, in der das Aufzeichnungsmedium zu dem Aufzeichnungsmedium-Antriebsabschnitt hin geschickt wird, sich von dem Aufzeichnungsmedium-Antriebsabschnitt fort bewegt; und
wobei dann, wenn das Aufzeichnungsmedium ausgeworfen wird, die Transferrolle sich in einer Richtung dreht und bewegt, die der Richtung entgegengesetzt ist, in der sich die Transferrolle dreht und bewegt, wenn das Aufzeichnungsmedium in die Öffnung eingeführt wird.

2. Aufzeichnungsmedium-Transfermechanismus nach Anspruch 1, bei welchem die Transferrolle (R) eine Welle hat, welche beweglich zwischen der Öffnung und dem Aufzeichnungsmedium-Antriebsabschnitt gelagert ist; wobei Aufzeichnungsmedium-Antriebsabschnitt (9, 10) hin schickt, die Transferrolle sich von dem Aufzeichnungsmedium-Antriebsabschnitt fort bewegt; und wobei dann, wenn das Aufzeichnungsmedium zu dem Aufzeichnungsmedium-Antriebsabschnitt hin geschickt worden ist, die Transferrolle sich von dem Aufzeichnungsmedium fort bewegt.

3. Aufzeichnungsmedium-Transfermechanismus nach Anspruch 1, bei welchem die Transferrolle (R) eine Welle hat, die zwischen der Öffnung (3a) und dem Aufzeichnungsmedium-Antriebsabschnitt (9, 10) beweglich gelagert ist; und wobei dann, wenn die Transferrolle damit beginnt, sich in einer Richtung zu bewegen, in welcher das Aufzeichnungsmedium entnommen wird, die Transferrolle auf einem Laufabschnitt (14b), welcher in einer Vorrichtung vorgesehen ist, abrollt und sich dem Aufzeichnungsmedium-Antriebsabschnitt nähert, um eine Stelle zu erreichen, wo die Transferrolle in der Lage ist, eine Entnahmekraft auf das Aufzeichnungsmedium bei diesem Aufzeichnungsmedium-Antriebsabschnitt aufzubringen.

4. Aufzeichnungsmedium-Transfermechanismus nach Anspruch 1, ferner umfassend Ausstoßmittel (14) zum Stoßen des Aufzeichnungsmediums bei dem Aufzeichnungsmedium-Antriebsabschnitt zu der Transferrolle (R) hin; wobei dann, wenn die Transferrolle sich zu dem Aufzeichnungsmedium-Antriebsabschnitt hin bewegt, die Ausstoßmittel in der Weise wirksam werden, daß sie das Aufzeichnungsmedium zu der Transferrolle hin stoßen.

5. Aufzeichnungsmedium-Transfermechanismus nach Anspruch 4, bei welchem die Ausstoßmittel einen integral ausgebildeten Laufabschnitt (14b) aufweisen, welcher dazu verwendet wird, das Aufzeichnungsmedium zwischen dem Laufabschnitt und der Transferrolle einzuklemmen, oder welcher in Kontakt mit der Transferrolle kommt; wobei durch eine Drehkraft, die erzeugt wird, wenn die Transferrolle sich in der Richtung dreht, in der das Aufzeichnungsmedium eingeführt wird, die Stoßmittel sich zu der Rückseite der Vorrichtung hin bewegen; und wobei durch eine Drehkraft, die erzeugt wird, wenn die Transferrolle sich in einer Richtung dreht, in welcher das Aufzeichnungsmedium entnommen wird, die Ausstoßmittel sich zu der Transferrolle hin bewegen.

## Revendications

1. Mécanisme de transfert de support d'enregistrement, comprenant :
une ouverture (3a) destinée à insérer un support d'enregistrement dans celle-ci et l'enlever de celle-ci ;
une partie d'entraînement de support d'enregistrement (9, 10) destinée à entraîner le support d'enregistrement ; et
un rouleau de transfert (R) disposé entre ladite ouverture et ladite partie d'entraînement de support d'enregistrement ;
**caractérisé en ce que**, lorsque ledit support d'enregistrement est inséré dans ladite ouverture, ledit rouleau de transfert, tout en tournant dans un sens dans lequel le support d'enregistrement est envoyé vers ladite partie d'entraînement de support d'enregistrement, s'éloigne de ladite partie d'entraînement de support d'enregistrement ; et
dans lequel, lorsque le support d'enregistrement est évacué, ledit rouleau de transfert tourne et se déplace dans un sens opposé au sens dans lequel le rouleau de transfert tourne et se déplace lorsque le support d'enregistrement est inséré dans ladite ouverture.

2. Mécanisme de transfert de support d'enregistrement selon la revendication 1, dans lequel ledit rouleau de transfert (R) comporte un arbre qui est supporté de manière mobile entre ladite ouverture et ladite partie d'entraînement de support d'enregistrement ; dans lequel, par suite d'une force de réaction de rotation produite lorsque ledit rouleau de transfert envoie le support d'enregistrement vers ladite partie d'entraînement de support d'enregistrement (9, 10), ledit rouleau de transfert s'éloigne de ladite partie d'entraînement de support d'enregistrement ; et dans lequel, lorsque le support d'enregistrement a été envoyé vers ladite partie d'entraînement de support d'enregistrement, ledit rouleau de transfert s'éloigne du support d'enregistrement.

3. Mécanisme de transfert de support d'enregistrement selon la revendication 1, dans lequel ledit rouleau de transfert (R) comporte un arbre qui est supporté de manière mobile entre ladite ouverture (3a) et ladite partie d'entraînement de support d'enregistrement (9, 10) ; et dans lequel, lorsque ledit rouleau de transfert commence à se déplacer dans un sens dans lequel le support d'enregistrement est enlevé, ledit rouleau de transfert roule sur une partie de déplacement (14b) prévue dans un dispositif et s'approche de ladite partie d'entraînement de support d'enregistrement afin d'atteindre un emplacement où ledit rouleau de transfert est capable d'exercer une force d'extraction sur le support d'enregistrement au niveau de ladite partie d'entraînement de support d'enregistrement.

4. Mécanisme de transfert de support d'enregistrement selon la revendication 1, comprenant de plus un moyen d'extraction par poussée (14) destiné à pousser le support d'enregistrement au niveau de ladite partie d'entraînement de support d'enregistrement vers ledit rouleau de transfert (R) ; dans lequel, lorsque ledit rouleau de transfert se déplace vers ladite partie d'entraînement de support d'enregistrement, ledit moyen d'extraction par poussée agit pour pousser le support d'enregistrement vers ledit rouleau de transfert.

5. Mécanisme de transfert de support d'enregistrement selon la revendication 4, dans lequel ledit moyen d'extraction par poussée comporte une partie de déplacement formée en un seul bloc (14b) qui est utilisée pour serrer le support d'enregistrement entre ladite partie de déplacement et ledit rouleau de transfert ou qui vient en contact avec ledit rouleau de transfert ; dans lequel, par une force de rotation produite lorsque ledit rouleau de transfert tourne dans le sens dans lequel le support d'enregistrement est inséré, ledit moyen d'extraction par poussée se déplace vers le côté arrière du dispositif ; et dans lequel, par une force de rotation produite lorsque ledit rouleau de transfert tourne dans un sens dans lequel le support d'enregistrement est enlevé, ledit moyen d'extraction par poussée se déplace vers ledit rouleau de transfert.
